# EUROPÄISCHE PATENTANMELDUNG

(11) **EP 4 089 308 A1**
(43) Veröffentlichungstag der Anmeldung: **16.11.2022**
(21) Anmeldenummer: 21173854.7
(22) Anmeldetag: 14.05.2021
(51) Int. Cl.: F16L 37/113, F16L 37/20

(54) **FLUIDLEITUNG ZUR VERBINDUNG MIT EINER KUPPLUNG**

(71) Anmelder: TI Automotive (Fuldabrück) GmbH, 34277 Fuldabrück (DE)
(72) Erfinder: Jensen, Hans, 73265 Dettingen unter Teck (DE); Fiedler, Uwe, 68804 Altlußheim (DE)
(74) Vertreter: Andrejewski - Honke Patent- und Rechtsanwälte Partnerschaft mbB

(57) **Zusammenfassung**

Eine Fluidleitung (1) zur Verbindung mit einem Aggregat (2) eines Kraftfahrzeugs umfasst ein Rohr (3) und wenigstens einen Steckverbinder (4). Der Steckverbinder (4) ist zum Einstecken in eine komplementäre Kupplung (5) ausgebildet und weist einen Hauptkörper (6) sowie ein Verriegelungselement (9) zur Verriegelung mit der Kupplung (5) auf. Das Verriegelungselement (9) ist relativ zum Hauptkörper (6) drehbar um eine Drehachse D gelagert und so ausgebildet, dass eine Verriegelung des Steckverbinders (4) über eine Drehung des Verriegelungselements (9) um die Drehachse D erreicht wird. Das Verriegelungselement (9) umfasst wenigstens eine Verriegelungskontur (16) und ist so ausgebildet, dass durch eine Drehung des Verriegelungselements (9) während eines Verriegelungsvorgangs mit einer Kupplung (5) eine axial auf den Steckverbinder (4) einwirkende Kraft in Richtung der Kupplung (5) ausgeübt wird.

## Beschreibung

Die Erfindung betrifft eine Fluidleitung zur Verbindung mit einem Aggregat eines Kraftfahrzeugs, umfassend ein Rohr und wenigstens einen Steckverbinder, wobei der Steckverbinder zum Einstecken in eine komplementäre Kupplung ausgebildet ist, wobei der Steckverbinder einen Hauptkörper und ein Verriegelungselement zur Verriegelung mit der Kupplung umfasst, wobei das Verriegelungselement relativ zum Hauptkörper drehbar um eine Drehachse D gelagert ist, wobei der Steckverbinder bzw. das Verriegelungselement so ausgebildet ist, dass eine Verriegelung des Steckverbinders über eine Drehung des Verriegelungselements um die Drehachse D erreicht wird, wobei das Verriegelungselement eine Verriegelungskontur aufweist. Die Erfindung betrifft auch eine Fluidverbindung umfassend diese Fluidleitung und eine Kupplung sowie eine Verwendung dieser Fluidleitung und dieser Fluidverbindung.

Ein solche Fluidverbindung ist aus DE 41 29 397 C1 bekannt und umfasst eine Kupplung eines Aggregats, welche auf ihrer Außenseite abschnittsweise umlaufende Nuten aufweist. Diese Nuten dienen der Aufnahme von entsprechenden Haken eines Verriegelungselements des Steckverbinders. Dieses Verriegelungselement ist drehbar auf dem Steckverbinder gelagert, so dass es bajonettartig mit den Nuten der Kupplung in Eingriff gebracht werden kann.

Diese Fluidverbindung und wohl alle bekannten Fluidverbindungen umfassen wenigstens eine Dichtung in Form von ein oder zwei elastischen Dichtungsringen, welche in radialer Richtung zwischen einem Steckerschaft des Steckverbinders und einer Innenwand der Kupplung angeordnet sind. Die Dichtungsringe können sowohl auf dem Steckverbinder als auch in die Kupplung eingesetzt sein. Die Dichtwirkung der Dichtringe ist dabei umso effektiver, je größer die auf die Dichtungsringe einwirkenden Klemmkräfte sind. Hierdurch allerdings vergrößern sich auch die aufzuwendenden Kräfte in axialer Richtung, um den Steckverbinder vollständig in die Kupplung einzustecken.

Der Dichtungsring, der Steckverbinder und die Kupplung sind hinsichtlich ihrer Durchmesser mit Toleranzen von ca. 0,1mm und noch weniger präzise aufeinander abgestimmt. Ist die Kupplung nur geringfügig zu groß oder der Dichtungsring bzw. der Steckverbinder nur geringfügig zu klein geraten, so ist die Fluidverbindung undicht. Im umgekehrten Fall treten zu große axiale Kräfte auf. Diese können das Zusammenstecken einer einzelnen Fluidverbindung umständlich machen, was den qualitativen Eindruck der Fluidverbindung erheblich mindert.

Aufgrund der geringen Toleranzen der Durchmesser beliefert der Hersteller der Fluidleitung den Hersteller des Aggregats oder des Gesamtsystems (z.B. einen Fahrzeughersteller) mit einem Adapter, welcher am einen Ende eine Schnittstelle für den Rest des Aggregats umfasst und am anderen Ende präzise komplementär zur Fluidleitung ausgebildet ist. Die Schnittstelle kann beliebig ausgeführt werden und beispielsweise verschweißt, verklebt, als Presspassung ausgestaltet und/oder verschraubt sein. Der Adapter ermöglicht auf der einen Seite somit eine optimale Steckverbindung, erzeugt jedoch buchstäblich auf der anderen Seite einen Mehraufwand in Form der Schnittstelle.

Nachteilig an den bekannten Fluidverbindungen mit Aggregaten ist daher, dass der Herstellungsaufwand auf Seiten der Aggregate zu groß ist. Der Erfindung liegt somit die technische Aufgabe zugrunde, den Herstellungsaufwand auf Seiten der Aggregate zu verringern. Vorzugsweise liegt der Erfindung die technische Aufgabe zugrunde, den Adapter einzusparen, so dass der Herstellungsaufwand der Adapterschnittstelle entfällt.

Diese Aufgabe wird gelöst durch eine Fluidleitung zur Verbindung mit einem Aggregat oder einer anderen Fluidleitung eines Kraftfahrzeugs, wobei die Fluidleitung ein Rohr und wenigstens einen Steckverbinder umfasst, wobei der Steckverbinder zum Einstecken in eine komplementäre Kupplung des Aggregats oder der anderen Fluidleitung ausgebildet ist,
wobei der Steckverbinder einen Hauptkörper aufweist, wobei der Hauptkörper ein erstes, der Kupplung zugeordnetes Ende und ein zweites, dem ersten Ende abgewandtes Ende umfasst, wobei das erste Ende und das zweite Ende durch einen Fluidkanal miteinander verbunden sind, wobei der Fluidkanal eine Achse A aufweist und eine axiale und eine radiale Richtung definiert, wobei das zweite Ende Bestandteil eines Verbindungsabschnitts des Hauptkörpers ist, wobei der Verbindungsabschnitt mit dem Rohr verbunden ist,
wobei der Steckverbinder ein Verriegelungselement zur Verriegelung mit der Kupplung umfasst, wobei das Verriegelungselement relativ zum Hauptkörper drehbar um eine Drehachse D gelagert ist, wobei der Steckverbinder bzw. das Verriegelungselement so ausgebildet ist, dass eine Verriegelung des Steckverbinders über eine Drehung des Verriegelungselements um die Drehachse D erreicht wird, wobei das Verriegelungselement wenigstens eine Verriegelungskontur aufweist, wobei das Verriegelungselement so ausgebildet ist, dass durch eine Drehung des Verriegelungselements während eines Verriegelungsvorgangs mit einer Kupplung eine axial auf den Steckverbinder einwirkende Kraft in Richtung der Kupplung ausgeübt werden kann.

Der erfindungsgemäßen Lösung liegt zunächst die Erkenntnis zugrunde, dass das Tauschen von Kupplung und Steckverbinder wesentlich für das Erreichen der eingangs genannten Aufgabe ist. Hintergrund ist, dass sich präzise Innendurchmesser leichter herstellen lassen als präzise Außendurchmesser.

Während ein Innendurchmesser durch Bohrung bzw. Nachbohrung verhältnismäßig einfach präzise eingestellt werden kann, trifft dies auf Außendurchmesser nicht zu. Demzufolge ist es für die Lösung der eingangs genannten Aufgabe wesentlich, der Fluidleitung den Steckverbinder und dem Aggregat die Kupplung zuzuordnen. Insbesondere entfällt dann die frühere Notwendigkeit, einen Adapter zwecks Dichtungspräzision bereitzustellen, wodurch zugleich auch die Schnittstelle zwischen Adapter und Aggregat entfällt. Der Erfindung liegt ferner die Erkenntnis zugrunde, dass die Zuordnung des beweglichen Verriegelungselements zum Steckverbinder den Aufwand auf Seiten des Aggregats ebenfalls verringert. Denn hierdurch entfallen im Werk die Arbeitsschritte der Zuordnung und der Montage des beweglichen Verriegelungselementes am Aggregat.

Der Erfindung liegt schließlich die Erkenntnis zugrunde, dass die Drehbarkeit des Verriegelungselementes es ermöglicht, eine größere axiale Kraft auf den Steckverbinder beim Verriegeln auszuüben, als dies die Ausübung der Kraft in axialer Richtung vermochte. Es wurde gefunden, dass es dann weniger präziser Toleranzen zwischen einem Aufnahmeraum der Kupplung und dem Steckverbinder bedarf. Denn aufgrund der großen, ausübbaren axialen Kräfte bei drehbaren Verriegelungselementen kann die Spanne der zulässigen Innendurchmesser der Kupplung nach unten hin erweitert werden, weil die größeren, an der Dichtung auftretenden Kräfte durch das Verriegelungselement leichter aufgebracht werden können. Dies hat zur Folge, dass es auch der Bohrungen in der Kupplung nicht zwingend bedarf, so dass sich der aggregatseitige Herstellungsaufwand im Wesentlichen auf den Guss bzw. Spritzguss der Kupplungen aus Metall bzw. Kunststoff beschränken kann. Hierdurch wird die eingangs genannte Aufgabe gelöst.

Der Begriff "Fluidleitung" meint vorzugsweise ein Rohr mit wenigstens einem Steckverbinder und zweckmäßigerweise mit zwei Steckverbindern, wobei vorzugsweise an jedem Ende des Rohrs jeweils ein Steckverbinder angeordnet ist. Zweckmäßigerweise ist wenigstens einer der beiden Steckverbinder zum Einstecken in eine komplementäre Kupplung ausgebildet. Der Ausdruck "Aggregat" ist mit Vorteil ein Sammelbegriff, welcher alle Nicht-Fluidleitungs-Komponenten umfasst. Im Falle von Aggregaten handelt es sich beispielsweise um Tanks, Einspritzdüsen, Batteriemodule, Pumpen, Wärmetauscher und dergleichen. Der Begriff "Kupplung" meint vorzugsweise ein weibliches Steckelement. Der Steckverbinder zum Einstecken in eine komplementäre Kupplung ist zweckmäßigerweise ein männliches Steckelement.

Das Rohr umfasst vorzugsweise Kunststoff. Es ist bevorzugt, dass das Rohr ein Mehrschichtrohr ist. Mit Vorteil umfasst das Rohr wenigstens zwei bzw. drei bzw. vier Kunststoffschichten. Der Kunststoff des Rohrs bzw. einer Rohrschicht mag beispielsweise Polyamid sein. Der Steckverbinder bzw. der Hauptkörper bzw. das Verriegelungselement mag Kunststoff und/oder Metall aufweisen. Vorzugsweise umfasst der Steckverbinder bzw. der Hauptkörper bzw. das Verriegelungselement lediglich Kunststoff. Es ist bevorzugt, dass die Kupplung Kunststoff und/oder Metall aufweist. Vorteilhafterweise ist der Hauptkörper und/oder das Verriegelungselement und/oder die Kupplung irreversibel einstückig, vorzugsweise integral ausgebildet bzw. aus einem Guss / Spritzguss hergstellt.

Der Hauptkörper kann rotationssymmetrisch ausgestaltet sein. Gemäß einem Ausführungsbeispiel ist der Hauptkörper rotationssymmetrisch mit Ausnahme von Anordnungselementen für das Verriegelungselement ausgebildet. Es ist bevorzugt, dass die Fluidleitung und die Kupplung Bestandteile einer Fluidverbindung sind. Der Ausdruck "Verriegelung" meint vorzugsweise, dass die Fluidverbindung in einem verriegelten Zustand fluiddicht ist. Demgegenüber befindet sich die Fluidverbindung in einem offenen Zustand, wenn der Steckverbinder nicht in die Kupplung eingeführt ist. Die Fluidverbindung befindet sich in einem Zwischenzustand, wenn weder der offene noch der verriegelte Zustand vorliegt. Der Ausdruck "wobei der Steckverbinder zum Einstecken in eine komplementäre Kupplung ausgebildet ist" meint vorzugsweise lediglich die Eignung des Steckverbinders hierzu. Dieser Ausdruck meint insbesondere nicht, dass die Kupplung als Bestandteil der Fluidleitung zu betrachten ist. Stattdessen ist die Kupplung Bestandteil der Fluidverbindung.

Es ist bevorzugt, dass die Kupplung wenigstens ein Verriegelungsteil und vorzugsweise zwei Verriegelungsteile und weiter vorzugsweise lediglich zwei Verriegelungsteile aufweist. Es ist sehr bevorzugt, dass das wenigstens eine Verriegelungsteil starr an der Kupplung angeordnet ist. Es ist bevorzugt, dass das wenigstens eine Verriegelungsteil auf einer Außenseite der Kupplung befindlich ist. Zweckmäßigerweise ist die Außenseite der Kupplung wenigstens abschnittsweise in axialer Richtung zylindrisch ausgestaltet. Es ist sehr bevorzugt, dass das wenigstens eine Verriegelungsteil nach außen in radialer Richtung gegenüber der, vorzugsweise zylindrischen, Außenseite der Kupplung vorsteht. Gemäß einer besonders bevorzugten Ausführungsform ist das wenigstens eine Verriegelungsteil als Zapfen ausgebildet. Der Zapfen mag in seinem Querschnitt abgerundet und vorzugsweise kreisrund ausgebildet sein. Es ist bevorzugt, dass eine radiale Ausdehnung des Verriegelungsteils ausgehend von der Außenseite der Kupplung wenigstens 1 mm und vorzugsweise wenigstens 2 mm beträgt. Mit Vorteil entspricht die radiale Ausdehnung des wenigstens einen Verriegelungsteils höchstens 5 mm und vorzugsweise höchstens 4 mm. Es ist ganz besonders bevorzugt, dass die Verriegelungsteile in Umfangsrichtung zueinander identische Winkelabstände aufweisen.

Mit Vorteil ist das Verriegelungselement so ausgebildet, dass eine, vorzugsweise manuell ausgeführte, Drehung des Verriegelungselements beim Verriegelungsvorgang mit der Kupplung in eine axial auf den Steckverbinder wirkende Kraft umgewandelt wird. Es ist von sehr vorteilhaft, dass die Verriegelung lediglich durch die Drehung des Verriegelungselements erreichbar ist. Es ist bevorzugt, dass der Steckverbinder bzw. das Verriegelungselement so ausgebildet ist, dass die Drehung des Verriegelungselements in eine axiale Bewegung des Steckverbinders umgewandelt wird, wobei die axiale Bewegung des Steckverbinders vorzugsweise einem letzten, axialen Wegstück des Steckverbinders in die Kupplung hineinentspricht.

Gemäß einer sehr bevorzugten Ausführungsform definiert die Verriegelungskontur einen beweglichen Verriegelungsweg für ein, vorzugsweise starres, Verriegelungsteil der Kupplung. Es ist bevorzugt, dass der Steckverbinder bzw. die Kupplung bzw. das Verriegelungselement bzw. das Verriegelungsteil so ausgebildet ist/sind, dass während der Drehung des Verriegelungselements die Verriegelungskontur über wenigstens einen Abschnitt ihrer Länge hinweg entlang des zugeordneten Verriegelungsteils bewegt wird. Der Verriegelungsweg bzw. die Verriegelungskontur ist vorzugsweise so ausgebildet, dass er/sie eine Drehbewegung des Verriegelungselements in eine axiale Bewegung des Steckverbinders umwandelt. Die Verriegelungskontur bzw. der Verriegelungsweg weist zweckmäßigerweise einen Ausgangspunkt auf, an welchem das Verriegelungsteil während der Drehung zum Verriegeln erstmalig mit dem Verriegelungsweg bzw. der Verriegelungskontur in Kontakt kommt. Es ist bevorzugt, dass die Verriegelungskontur bzw. der Verriegelungsweg eine Verriegelungsstelle umfasst. Das Verriegelungselement ist vorzugsweise so ausgebildet, dass bei Erreichen der Verriegelungsstelle des Verriegelungsteils die axiale Bewegung des Steckverbinders in die Kupplung hinein abgeschlossen ist. Es ist sehr bevorzugt, dass die Verriegelungsstelle ein Ende des Verriegelungsweges bildet.

Gemäß einer besonders vorteilhaften Ausführungsform ist die Verriegelungskontur so ausgebildet, dass der notwendige Kraftaufwand beim Verriegeln des Verriegelungselements zunächst ansteigt und dann abfällt, so dass das Verriegeln vorzugsweise ein Einrasten des Verriegelungselements umfasst. Es ist sehr bevorzugt, dass die Verriegelungsstelle in axialer Richtung weiter entfernt vom zweiten Ende des Hauptkörpers ist als ein davor liegender Abschnitt des Verriegelungsweges. Vorzugsweise ist ein Abschnitt des Verriegelungsweges zwischen dem Ausgangspunkt und der Verriegelungsstelle in axialer Richtung und im verriegelten Zustand näher an dem zweiten Ende des Hauptkörpers angeordnet als alle anderen Abschnitte des Verriegelungsweges. Mit Vorteil ist der Ausgangspunkt des Verriegelungsweges derjenige Punkt bzw. Abschnitt des Verriegelungsweges, welcher am weitesten vom zweiten Ende des Hauptkörpers in axialer Richtung entfernt ist. Es ist sehr bevorzugt, dass die Verriegelungsstelle in axialer Richtung, insbesondere während des verriegelten Zustands, zwischen dem Ausgangspunkt und dem Abschnitt des Verriegelungsweges angeordnet ist, welcher dem zweiten Ende des Hauptkörpers am nächsten ist.

Es ist bevorzugt, dass sich der Verriegelungsweg über wenigstens 5 mm und vorzugsweise über wenigstens 7 mm erstreckt. Es ist möglich, dass die Verriegelungskontur eine Kante und vorzugsweise lediglich eine Kante aufweist, welche den Verriegelungsweg definiert. Gemäß einem Ausführungsbeispiel umfasst die Verriegelungskontur zwei Kanten, welche den Verriegelungsweg definieren. Es ist bevorzugt, dass die beiden Kanten der Verriegelungskontur parallel zueinander verlaufen. Zweckmäßigerweise ist der Abstand der beiden Kanten zueinander größer als ein Durchmesser bzw. eine Ausdehnung des Verriegelungsteils zwischen den beiden Kanten.

Es ist besonders vorteilhaft, dass der Steckverbinder beim Drehen während des Verriegelungsvorgangs um wenigstens 1 mm bzw. 2 mm bzw. 3 mm in axialer Richtung zur Kupplung hingezogen wird. Es ist von Vorteil, dass eine Ausdehnung der Verriegelungskontur in axialer Richtung bzw. des Verriegelungsweges wenigstens 1 mm bzw. 2 mm bzw. 3 mm beträgt. Es ist bevorzugt, dass die Verriegelungskontur bzw. der Verriegelungsweg länger ist als eine Ausdehnung des Verriegelungsteils in Richtung der Verriegelungskontur bzw. des Verriegelungsweges. Es ist von Vorteil, dass die Verriegelungsstelle ausgebildet ist, ein Verriegelungsteil der Kupplung aufzunehmen. Zweckmäßigerweise definiert ein in der Verriegelungsstelle aufgenommenes Verriegelungsteil einen verriegelten Zustand. Es ist sehr bevorzugt, dass das Verriegelungselement bzw. die Verriegelungskontur nur so ausgebildet ist, dass für die Überführung in den verriegelten Zustand und/oder für das Verlassen des verriegelten Zustands eine Kraftschwelle überwunden werden muss.

Gemäß einer bevorzugten Ausführungsform umfasst die Verriegelungskontur wenigstens eine Verriegelungsstelle, wobei das Verriegelungselement bevorzugt so ausgebildet ist, dass das Verriegelungsteil in der Verriegelungsstelle sichtbar bzw. vollständig sichtbar ist. Zweckmäßigerweise umschließt das Verriegelungselement wenigstens entlang eines axialen Abschnitts und über wenigstens einen Abschnitt in Umfangsrichtung den Hauptkörper bzw. einen/den Anschlag. Es ist bevorzugt, dass das Verriegelungselement auf einer Außenseite des Hauptkörpers angeordnet ist.

Mit Vorteil weist das Verriegelungselement eine Ausnehmung auf, so dass das Verriegelungsteil während des Drehens des Verriegelungselements beim Verriegeln sichtbar ist bzw. vollständig sichtbar ist. Die Ausnehmung kann beispielsweise fensterartig, insbesondere in länglicher Form, ausgebildet sein. Die Ausnehmung kann durch eine einzige Kante, beispielsweise durch eine Kante eines Schwenkarms, definiert sein. Der Vorteil der Sichtbarkeit des Verriegelungsteils während des Verriegelns und insbesondere während des Drehens beim Verriegelungsvorgang liegt darin, dass der Nutzer den Verriegelungsfortschritt beobachten kann.

Besonders vorzugsweise umfasst der Steckverbinder bzw. das Verriegelungselement ein Anzeigeelement zur Anzeige der vollständigen Verriegelung, wobei das Anzeigeelement bevorzugt einen Anschlag der Verriegelungskontur und/oder ein Anzeigesymbol umfasst. Gemäß einer bevorzugten Ausführungsform beendet der Anschlag der Verriegelungskontur den Verriegelungsweg. Vorzugsweise definiert der Anschlag der Verriegelungskontur die Verriegelungsstelle. Mit Vorteil bildet der Anschlag der Verriegelungskontur eine Wand der Verriegelungskontur bzw. eine Wand des Endes des Verriegelungsweges. Es ist besonders bevorzugt, dass das Anzeigeelement bzw. der Anschlag der Verriegelungskontur während des Verriegelungsvorgangs für den Nutzer sichtbar ist. Es ist von Vorteil, dass der Steckverbinder so ausgebildet ist, dass das Verriegelungsteil in einem verriegelten Zustand des Steckverbinders sich in der Verriegelungsstelle befindet.

Es ist sehr bevorzugt, dass das Anzeigesymbol für den Nutzer optisch erkennbar ist. Das Anzeigesymbol kann auf dem Steckverbinder bzw. dem Hauptkörper aufgebracht bzw. aufgedruckt bzw. aufgeprägt bzw. aufgeklebt sein. Das Anzeigesymbol mag beispielsweise als Strichcode oder als QR-Code ausgebildet sein. Gemäß anderen Ausführungsformen kann das Anzeigesymbol beispielsweise als grüner oder roter Punkt am Steckverbinder bzw. am Hauptkörper angeordnet sein. Es ist besonders bevorzugt, dass der Steckverbinder bzw. der Hauptkörper bzw. das Verriegelungselement so ausgebildet ist, dass das Anzeigesymbol von dem Verriegelungselement entweder nur in der verriegelten Position oder nur in der geöffneten Position wenigstens teilweise verdeckt ist. Es ist besonders vorteilhaft, dass das Anzeigesymbol von dem Verriegelungselement in der geöffneten Position des Verriegelungselements wenigstens teilweise verdeckt wird und in der verriegelten Position weniger bzw. gar nicht von dem Verriegelungselement verdeckt wird. Das Anzeigesymbol mag beispielsweise auf einem/den Anschlag des Hauptkörpers bzw. auf einer Außenseite des Anschlags des Hauptkörpers angeordnet sein. Es ist bevorzugt, dass der Steckverbinder so ausgebildet ist, dass bei einer Sichtbarkeit eines/des Betätigungsabschnitts des Verriegelungselements zugleich auch das Anzeigesymbol entweder in der verriegelten Position oder in der geöffneten Position des Verriegelungselements sichtbar ist.

Besonders vorzugsweise umfasst das Verriegelungselement einen Betätigungsabschnitt zur Durchführung der Verriegelung bzw. des Drehens des Verriegelungselements während des Verriegelungsvorgangs. Es ist sehr bevorzugt, dass der Betätigungsabschnitt des Verriegelungselements in der axialen Hälfte des Verriegelungselements angeordnet ist, welche von dem ersten Ende des Hauptkörpers abgewandt ist. Der Betätigungsabschnitt kann in radialer oder in Umfangsrichtung betätigbar sein. Der Betätigungsabschnitt ist zweckmäßigerweise für die Betätigung per Hand ausgebildet. Der Betätigungsabschnitt kann beispielsweise einen Vorsprung und/oder eine rutschfeste Oberfläche umfassen. Es ist möglich, dass der Betätigungsabschnitt als Haken oder feststellschraubenartig ausgebildet ist. Es ist sehr bevorzugt, dass die Verriegelungskontur zwischen einem kupplungsseitigen Ende des Verriegelungselements und dem Betätigungsabschnitt angeordnet ist.

Gemäß einer sehr bevorzugten Ausführungsform weist der Steckverbinder bzw. der Hauptkörper einen Anschlag, vorzugsweise einen Anschlagflansch auf. Es ist bevorzugt, dass der Anschlag sich in radialer Richtung erstreckt bzw. in radialer Richtung gegenüber einer Außenseite des Hauptkörpers vorspringt. Der Anschlag bzw. Anschlagflansch ist besonders bevorzugt wenigstens abschnittsweise und weiter bevorzugt vollständig umlaufend ausgebildet. Der Anschlag weist bevorzugt eine radiale Ausdehnung von wenigstens 1/2/3 mm auf. Zweckmäßigerweise besitzt der Anschlag eine axiale Ausdehnung von wenigstens 1/2/3 mm. Es ist bevorzugt, dass der Anschlag in einer mittleren Hälfte der axialen Ausdehnung des Hauptkörpers angeordnet ist. Es ist von Vorteil, dass der Hauptkörper in axialer Richtung den Verbindungsabschnitt und einen Steckerschaft aufweist. Es ist zweckmäßig, dass der Anschlag den Hauptkörper in axialer Richtung in den Verbindungsabschnitt und in einen Steckerschaft unterteilt. Vorteilhafterweise entspricht der Steckerschaft dem in die Kupplung einsteckbaren, axialen Abschnitt des Hauptkörpers. Es ist bevorzugt, dass ein/der Steckerschaft zwischen dem Anschlag und dem ersten Ende des Hauptkörpers in axialer Richtung befindlich ist. Mit Vorteil ist der Verbindungsabschnitt zwischen dem zweiten Ende des Hauptkörpers und dem Anschlag des Hauptkörpers angeordnet. Es ist bevorzugt, dass die axiale Ausdehnung des Steckerschafts größer ist als diejenige des Verbindungsabschnitts.

Vorteilhafterweise umfasst der Steckverbinder eine Dichtung. Die Dichtung ist vorzugsweise als Dichtungsring ausgebildet. Die Dichtung umfasst zweckmäßigerweise einen elastischen Kunststoff. Mit Vorteil umfasst die Dichtung eine Ringnut. Vorzugsweise ist die Dichtung bzw. der Dicktring bzw. die Ringnut an dem Steckerschaft bzw. auf einer Außenseite des Steckerschaftes bzw. des Steckverbinders bzw. des Hauptkörpers angeordnet. Es ist zweckmäßig, dass der Dichtungsring in die Ringnut eingesetzt ist. Der Steckerschaft bzw. der Hauptkörper umfasst vorzugsweise einen Mittelabschnitt und/oder einen Endabschnitt. Es ist bevorzugt, dass der Mittelabschnitt in axialer Richtung zwischen der Dichtung und dem Anschlag des Hauptkörpers angeordnet ist. Vorteilhafterweise unterteilt die Dichtung den Steckerschaft in axialer Richtung in einen/den Endabschnitt und in einen/den Mittelabschnitt. Zweckmäßigerweise ist der Endabschnitt in axialer Richtung zwischen der Dichtung und dem ersten Ende des Hauptkörpers angeordnet. Es ist bevorzugt, dass der Endabschnitt und/oder der Mittelabschnitt eine axiale Länge von wenigstens 2/3/4 mm aufweist.

Es ist sehr von Vorteil, dass eine axiale Länge des Verriegelungselements wenigstens 50/60/70/80 % der axialen Länge des Hauptkörpers entspricht. Hierdurch wird erreicht, dass das Verriegelungselement manuell besser betätigbar ist. Beispielsweise im Falle eines bajonettartigen Verriegelungselements kann ein/der Betätigungsabschnitt des Verriegelungselements axial weiter von der Verriegelungskontur bzw. dem Verriegelungsteil bzw. dem Aggregat entfernt werden, so dass eine Hand das Verriegelungselement besser betätigen kann. Dies gilt insbesondere für Aggregate, welche eine Wand senkrecht zur Achse A aufweisen und dementsprechend die Bewegungsfreiheit der Hand einschränken. In einem anderen Ausführungsbeispiel führt eine große axiale Länge des Verriegelungselements dazu, dass eine Hebellänge eines/des Betätigungsabschnitts größer wird, so dass dementsprechend größere Kräfte auf die Verriegelungskontur bzw. das Verriegelungsteil einwirken können. Der Hauptkörper ist vorzugsweise wenigstens 15/20/25/30 mm lang. Der Hauptkörper weist zweckmäßigerweise eine axiale Länge von höchstens 100/80/60 mm auf. Es ist bevorzugt, dass das Verriegelungselement in einem verriegelten Zustand und/oder in einem geöffneten Zustand in axialer Richtung zur Kupplung hin eine/die Dichtung überragt. Es ist bevorzugt, dass das Verriegelungselement in einer geöffneten und/oder einer verriegelten Position einen/den Anschlag des Hauptkörpers in axialer Richtung auf das zweite Ende bzw. das Rohr hin überragt.

Es ist bevorzugt, dass die axiale Ausdehnung eines in die Kupplung einsteckbaren Abschnitts bzw. des Steckerschafts des Hauptkörpers wenigstens 20 % / 30 % 40 % / 50 % der gesamten axialen Länge des Hauptkörpers entspricht. Hierdurch wird erreicht, dass der zwischen dem Hauptkörper und der Kupplung entstehende Formschluss in radialer Richtung über eine größere, axiale Strecke ausgebildet wird, wodurch die mechanische Stabilität der Fluidverbindung insgesamt verbessert wird.

Gemäß einer Ausführungsform verläuft die Drehachse D des Verriegelungselements in axialer bzw. im Wesentlichen axialer Richtung bzw. parallel zur Achse A. Es ist bevorzugt, dass das Verriegelungselement als bajonettartige Hülse ausgestaltet ist. Mit Vorteil ist der Betätigungsabschnitt des Verriegelungselements wenigstens abschnittsweise und bevorzugt vollständig um den Hauptkörper verlaufend ausgebildet. Der Betätigungsabschnitt kann beispielsweise in Form des Kopfes einer Feststellschraube ausgebildet sein. Es ist bevorzugt, dass der Betätigungsabschnitt an demjenigen axialen Ende des Verriegelungselements angeordnet ist, welcher vom ersten Ende des Hauptkörpers abgewandt bzw. dem zweiten Ende des Hauptkörpers zugeordnet ist. Es ist sehr von Vorteil, dass der Betätigungsabschnitt eine radial nach innen vorspringende Schulter aufweist. Es ist besonders bevorzugt, dass die radial nach innen ragende Schulter des Betätigungsabschnitts bzw. des Verriegelungselements bzw. der Hauptkörper so ausgebildet ist, dass die Schulter in einer verriegelten Position des Steckverbinders in axialer Richtung an dem Anschlag des Hauptkörpers anliegt und vorzugsweise in axialer Richtung eine Kraft auf die Richungskupplung ausübt. Zweckmäßigerweise liegt in der verriegelten Position eine axiale Innenseite der Schulter an einer, dem zweiten Ende des Hauptkörpers zugewandten Wand des Anschlags an. Es bevorzugt, dass die Schulter des Betätigungsabschnitts wenigstens abschnittsweise in Umfangsrichtung und vorzugsweise vollständig in Umfangsrichtung um den Verbindungsabschnitt des Hauptkörpers und/oder um ein Ende des Rohrs umläuft.

Mit Vorteil weist das Verriegelungselement an einem kupplungsseitigen Ende eine Verstärkung auf. Die Verstärkung mag als wenigstens teilweise und vorzugsweise vollständig umlaufender Bund ausgebildet sein. Vorteilhafterweise ist die Verriegelungskontur zwischen dem kupplungsseitigen Ende bzw. der Verstärkung und dem Betätigungsabschnitt angeordnet. Es ist besonders bevorzugt, dass die Verriegelungskontur in einer Wand des Verriegelungselements befindlich ist. Es ist sehr bevorzugt, dass die Verriegelungskontur die Wand des Verriegelungselements wenigstens abschnittsweise durchbricht. Mit Vorteil verläuft die Verriegelungskontur in der Wand des Verriegelungselements etwa in spiralförmiger Richtung. Es ist sehr bevorzugt, dass das Verriegelungsteil aufgrund des Durchbruchs in der Wand des Verriegelungselements sichtbar ist.

Gemäß einer Ausführungsform verläuft die Drehachse D des Verriegelungselements in einer Draufsicht des Steckverbinders schräg und vorzugsweise senkrecht zur Achse A und insbesondere in radialer bzw. im Wesentlichen radialer Richtung. Es ist sehr bevorzugt, dass das Verriegelungselement hebelartig schwenkbar um die Drehachse D ausgebildet ist. Vorzugsweise umfasst das Verriegelungselement wenigstens einen Schwenkarm und vorzugsweise zwei Schwenkarme. Mit Vorteil weist der wenigstens eine Schwenkarm die Verriegelungskontur auf. Vorteilhafterweise wird die Drehachse von zwei einander gegenüberliegenden Schwenkzapfen, insbesondere diametral gegenüberliegenden Schwenkzapfen, auf der Außenseite des Hauptkörpers gebildet.

Es ist sehr bevorzugt, dass die Schwenkzapfen auf einer Außenseite des Anschlags angeordnet sind. Gemäß einer Ausführungsform sind die Schwenkzapfen auf einer Innenseite des Verriegelungselements angeordnet und greifen in entsprechende Ausnehmungen auf der Außenseite des Hauptkörpers ein.

Es ist von Vorteil, dass der Betätigungsabschnitt dazu ausgebildet ist, in etwa radialer Richtung auf den Verbindungsabschnitt hin betätigt zu werden. Vorzugsweise ist der Betätigungsabschnitt so ausgebildet, dass er ein Lösen des verriegelten Verriegelungselements ermöglicht. Der Betätigungsabschnitt kann insbesondere als Haken ausgebildet sein, welcher in der verriegelten Position nach radial außen absteht. Es ist sehr bevorzugt, dass die Drehachse D in axialer Richtung zwischen dem Betätigungsabschnitt und dem Schwenkarm bzw. den Schwenkarmen bzw. der Verriegelungskontur bzw. den Verriegelungskonturen angeordnet ist. In einem Ausführungsbeispiel wird die Verriegelungskontur über eine, der Drehachse D bzw. dem Betätigungsabschnitt zugewandte Innenseite bzw. Innenkante des Schwenkarms gebildet. Es ist bevorzugt, dass der Schwenkarm etwa L-förmig ausgebildet ist.

Vorteilhafterweise umfasst das Verriegelungselement wenigstens einen Rastschenkel und vorzugsweise zwei Rastschenkel. Mit Vorteil rastet der bzw. rasten die Rastschenkel an einem Ende des Rohrs auf dem Verbindungsabschnitt in der verriegelten Position ein. Der Rastschenkel bzw. die Rastschenkel ist/sind vorzugsweise so ausgebildet, dass diese in der geöffneten Position auf einem Ende des Rohrs bzw. am Verbindungsabschnitt anliegen, so dass der Betätigungsabschnitt nur mit Kraftaufwand weiter in Richtung des Verbindungsabschnitts bewegbar ist. Gemäß einer besonders bevorzugten Ausführungsform ist ein/das Anzeigesymbol auf dem Hauptkörper bzw. auf einer Außenseite des Anschlags angeordnet. Es ist sehr bevorzugt, dass das hebelartige Verriegelungselement in einer geöffneten Position das Anzeigesymbol wenigstens teilweise verdeckt. Zweckmäßigerweise gibt das Verriegelungselement in der verriegelten Position das Anzeigesymbol wenigstens teilweise frei.

Die eingangs genannte Aufgabe wird gelöst durch eine Fluidverbindung umfassend eine Kupplung und eine erfindungsgemäße Fluidleitung, wobei der Steckverbinder der Fluidleitung in die Kupplung eingesteckt bzw. einsteckbar ist. Die Kupplung kann Bestandteil eines Aggregats oder einer anderen Fluidleitung sein. Die Kupplung weist zweckmäßigerweise ein dem Steckverbinder bzw. dem Hauptkörper bzw. dem Anschlag des Hauptkörpers zugewandtes Stirnende auf. Die Kupplung umfasst vorzugsweise in axialer Richtung einen Dichtungsabschnitt und/oder eine Endaufnahme. Der Dichtungsabschnitt ist zweckmäßigerweise hinsichtlich seines Innendurchmessers ausgebildet, die Dichtung des Steckverbinders fluiddicht aufzunehmen. Die Endaufnahme der Kupplung ist vorzugsweise ausgestaltet, einen Formschluss mit dem Endabschnitt des Steckverbinders in radialer Richtung einzugehen. Es ist sehr bevorzugt, dass ein Innendurchmesser des Dichtungsabschnitts größer ist als ein Innendurchmesser der Endaufnahme. Es ist zweckmäßig, dass die Kupplung bzw. das Aggregat bzw. die andere Fluidleitung einen Verbindungskanal aufweist. Mit Vorteil ist die Endaufnahme in axialer Richtung zwischen dem Dichtungsabschnitt und dem Verbindungskanal angeordnet. Vorzugsweise sind der Dichtungsabschnitt und/oder die Endaufnahme und/oder der Verbindungskanal konzentrisch zur Achse A ausgebildet. Es ist von Vorteil, dass ein Innendurchmesser des Verbindungskanals kleiner ist als derjenige der Endaufnahme und vorzugsweise dem Innendurchmesser des Fluidkanals des Steckverbinders entspricht. Die Kupplung mag Kunststoff und/oder Metall aufweisen.

Die eingangs genannte Aufgabe wird gelöst durch die Verwendung der erfindungsgemäßen Fluidleitung bzw. der erfindungsgemäßen Fluidverbindung in einem Kraftfahrzeug, vorzugsweise in einem Batteriemodul bzw. zur Verbindung mit einem Batteriemodul. Es ist sehr bevorzugt, dass die Fluidleitung bzw. der Fluidverbinder in einem Fahrzeug mit einem elektrischen Antrieb verwendet werden. Es ist bevorzugt, dass die Fluidleitung bzw. die Fluidverbindung in einem Kühlmittelkreislauf verwendet wird.

Die Erfindung wird nachfolgend anhand von vier Figuren zu zwei Ausführungsbeispielen erläutert. Es zeigen in schematischer Darstellung
- Figur 1: eine perspektivische Ansicht eines ersten erfindungsgemäßen Ausführungsbeispiels,
- Figur 2: einen Längsschnitt des Ausführungsbeispiels aus Figur 1,
- Figur 3: eine perspektivische Ansicht eines zweiten erfindungsgemäßen Ausführungsbeispiels,
- Figur 4: einen Längsschnitt des Ausführungsbeispiels aus Figur 3,
- Figur 5A: einen Ausschnitt von Figur 3 und
- Figur 5B: das Ausführungsbeispiel aus den Figuren 3 bis 5A, jedoch in einer verriegelten Position.

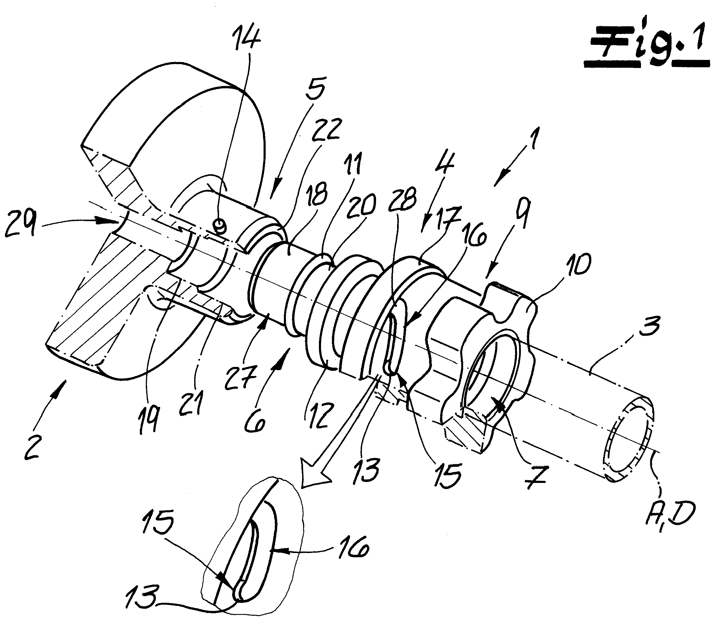

In Figur 1 ist ein erstes Ausführungsbeispiel eines erfindungsgemäßen Steckverbinders 4 dargestellt. Der Steckverbinder 4 umfasst einen Hauptkörper 6 sowie ein Verriegelungselement 9, welches in diesem Ausführungsbeispiel bajonettartig ausgebildet ist. Der Hauptkörper 6 und das Verriegelungselement 9 sind vorzugsweise separat ausgebildete Elemente. Der Hauptkörper 6 und/oder das Verriegelungselement 9 ist/sind vorzugsweise (jeweils) einstückig bzw. integral ausgebildet. Der Steckverbinder 4 ist Bestandteil einer Fluidleitung 1, welche neben dem Steckverbinder 4 insbesondere noch ein Rohr 3 aufweist. Das Rohr 3 ist mit dem Steckverbinder 4 verbunden, wie dies später noch etwas genauer dargestellt wird. Der Steckverbinder 4 bzw. der Hauptkörper 6 weist einen vorzugsweise zylindrisch ausgebildeten Fluidkanal 7 auf. Der Fluidkanal 7 bzw. der Hauptkörper 6 definiert eine Achse A, welche vorzugsweise eine Rotationssachse bzw. eine Längsachse des Hauptkörpers 6 ist. Der Fluidkanal 7 verbindet zweckmäßigerweise ein erstes, der Kupplung 5 zugewandtes Ende des Steckverbinders 4 bzw. des Hauptkörpers 6 mit einem zweiten, dem ersten Ende abgewandten Ende des Hauptkörpers 6. Das zweite, dem ersten abgewandten Ende des Hauptkörpers 6 ist vorzugsweise Bestandteil eines Verbindungsabschnitts 8. Der Verbindungsabschnitt 8 dieses Ausführungsbeispiels weist vorzugsweise eine geriffelte Oberfläche auf seiner Außenseite auf, wodurch das aufgesteckte Rohr 3 besser auf dem Hauptkörper 6 bzw. dem Verbindungsabschnitt 8 gehalten wird. Vorzugsweise wird das Rohr 3 per Kraftschluss auf einer Außenseite des Hauptkörpers 6 gehalten. In anderen Ausführungsbeispielen kann das Rohr 3 jedoch auch in eine holzylindrische Aufnahme eines hier nicht abgebildeten Hauptkörpers eingesteckt und beispielsweise per Schweißung, insbesondere per Laserschweißung, mit dem Hauptkörper verbunden werden.

Der Steckverbinder 4 ist ausgebildet, mit einem komplementären Gegenstück in Form einer Kupplung 5 zu einer Fluidverbindung 3, 4 ,5 verbunden zu werden. Die Kupplung 5 mag Bestandteil eines Aggregats 2 sein, bei welchem es sich beispielsweise um einen Tank, eine Einspritzdüse, ein Batteriemodul oder um eine sonstige Nicht-Fluidleitungs-Komponente handeln kann. Das Aggregat 2 jenseits der Kupplung 5 ist in den vorliegenden Figuren zwar als flacher Zylinder abgebildet, jedoch lediglich als Ausschnitt bzw. symbolische Formgebung für Aggregate 2 aller Art zu verstehen. In anderen Ausführungsbeispielen kann die Kupplung 5 allerdings auch Bestandteil einer zweiten Fluidleitung sein, so dass die erfindungsgemäßen Fluidverbindungen insbesondere auch die Verbindung zweier Rohre 3 umfassen können. Die Kupplung 5 dieses Ausführungsbeispiels weist an ihrer Außenseite zwei einander diametral gegenüberliegende Verriegelungsteile 14 in Form von radial nach außen vorstehenden Zapfen auf. Die Kupplung 5 wird zweckmäßigerweise in Richtung der Fluidleitung 1 durch ein Stirnende 22 begrenzt. Die Kupplung 5 ist vorteilhafterweise so ausgebildet, dass sie einen Aufnahmeraum zur Aufnahme des Steckverbinders 4 bzw. des Hauptkörpers 6 aufweist.

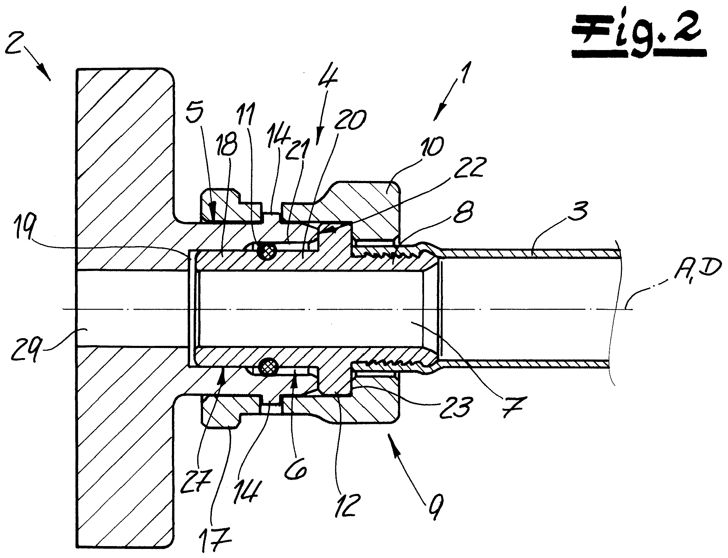

Der Hauptkörper 6 umfasst bevorzugt einen Anschlag 12, welcher weiter bevorzugt als Anschlagflansch ausgebildet ist. Vorteilhafterweise ist der Anschlagflansch als in Umlaufrichtung vollständig umlaufendes Element ausgebildet. Der Anschlag 12 unterteilt den Hauptkörper 6 in axialer Richtung vorzugsweise in den Verbindungsabschnitt 8 (vgl. Figur 2) und in einen Steckerschaft 27. Es ist bevorzugt, dass der Steckverbinder 4 eine Dichtung 11 aufweist, welche vorzugsweise als elastischer Dichtungsring ausgebildet ist. Zweckmäßigerweise umfasst der Steckerschaft 27 eine umlaufende Ringnut, in welche die Dichtung 11 eingesetzt ist. Die Dichtung 11 mag den Steckerschaft 27 bzw. den Hauptkörper 6 in axialer Richtung in einen Endabschnitt 18 und in einen Mittelabschnitt 20 unterteilen.

Das Verriegelungselement 9 dieses Ausführungsbeispiels ist hülsenartig in Form eines Überwurfelements ausgebildet. Das Verriegelungselement 9 umfasst bevorzugt an einem dem zweiten Ende des Hauptkörpers 6 zugeordneten axialen Abschnitt zweckmäßigerweise einen Betätigungsabschnitt 10, welcher in diesem Ausführungsbeispiel an den Kopf einer Feststellschraube erinnert. An einem dem ersten Ende des Hauptkörpers 6 zugeordneten axialen Abschnitt des Verriegelungselements 9 ist mit Vorteil eine Verstärkung 17, beispielsweise in Form eines umlaufenden Bundes, des Verriegelungselements 9 befindlich. Vorzugsweise ist das Verriegelungselement 9 drehbar auf dem Hauptkörper 6 gelagert und definiert eine zur Achse A parallele Drehachse D (vergleiche Figur 2). Das Verriegelungselement 9 weist vorzugsweise wenigstens eine Verriegelungskontur 16 auf, welche in diesem Ausführungsbeispiel als längliche Aussparung in einer Wand des hülsenartigen Verriegelungselementes 9 ausgestaltet ist. Mit Vorteil umfasst das Verriegelungselement 9 zwei - vorzugsweise identische - diametral bezüglich der Achse A einander gegenüberliegende Verriegelungskonturen 16. Die wenigstens eine Verriegelungskontur 16 ist zweckmäßigerweise dazu ausgebildet, das ihr zugeordnete Verriegelungsteil 14 der Kupplung 5 aufzunehmen, so dass das Verriegelungsteil 14 relativ zu dem Verriegelungselement 9 entlang der Verriegelungskontur 16 bewegt wird. Zweckmäßigerweise wird in diesem Ausführungsbeispiel jedoch nicht das Verriegelungsteil 14 bewegt, sondern das Verriegelungselement 9 wird anhand des Betätigungsabschnitts 10 betätigt, so dass das Verriegelungselement 9 mit der Verriegelungskontur 16 um seine Drehachse D gedreht wird. Nichtsdestotrotz bewegt sich das Verriegelungsteil 14 relativ zu der Verriegelungskontur 16.

Die Verriegelungskontur 16 weist einen Ausgangspunkt 28 auf, welcher beim Einstecken des Steckverbinders 4 zuerst mit dem Verriegelungsteil 14 der Kupplung 5 in Kontakt kommt. Durch Drehung des Verriegelungselements 9 erreicht das Verriegelungsteil 14 schließlich eine Verriegelungsstelle 15 der Verriegelungskontur 16, wobei die Verriegelungskontur 16 vorzugsweise einen beweglichen Verriegelungsweg für das bevorzugt starr ausgebildete Verriegelungsteil definiert. Der Verriegelungsweg bzw. die Verriegelungskontur 16 ist mit Vorteil so ausgebildet, dass er/sie bei Drehung des Verrieglungselements 9 eine axiale, in Richtung der Kupplung 5 wirkende Kraft auf den Steckverbinder 4 ausübt. Die Verriegelungskontur 16 dieses Ausführungsbeispiels ist abschnittsweise spiralförmig ausgebildet.

Die Verriegelungsstelle 15 ist bevorzugt dadurch gekennzeichnet, dass sie in axialer Richtung geringfügig näher an der Kupplung angeordnet ist im Vergleich zu dem davorliegenden Stück der Verriegelungskontur 16. Dadurch lassen die axialen, auf die Verriegelungskontur 16 und das Verriegelungsteil 14 wirkenden Kräfte nach, so dass der Verriegelungseffekt in Form eines Einrastens besonders vorteilhaft erreicht wird. Bevorzugtermaßen weist die Verriegelungsstelle 15 ein Anzeigeelement 13 in Form eines Anschlags auf. Hierdurch kann das Verriegelungsteil 14 nicht weiter gegenüber der Verriegelungskontur 16 bewegt werden als bis zur Verriegelungsstelle 15. Anhand des Anzeigeelements 13 in Form des Anschlags, erkennt der Benutzer auf den ersten Blick, dass die Verriegelung vollständig ausgeführt wurde.

Gleichzeitig sind gemäß Figur 2 die Kupplung 5 und der Steckverbinder 4 vorzugsweise so ausgebildet, dass das Stirnende 22 der Kupplung 5 in der verriegelten Position an dem Anschlag 12 des Steckverbinders 4 bzw. des Hauptkörpers 6 anschlägt. Dabei übt bevorzugt eine axial wirkende Kraft einer Schulter 23 des Verriegelungselements 9 auf den Anschlag 12, so dass dieser gegen das Stirnende 22 der Kupplung 5 gedrückt wird. Aufgrund des bis weiten recht großen Kraftschlusses zwischen der Dichtung 11 und dem Dichtungsabschnitt 21 ist eine entsprechend große axiale Kraft beim Einstecken des Steckverbinders 4 in die Kupplung 5 zu überwinden. Die Verriegelungskontur 16 ist bevorzugt so ausgebildet, dass durch die Drehung des Verriegelungselements 9 die manuell aufzuwendende Kraft für das letzte, axiale Wegstück bis zur vollständigen Verriegelung spürbar verringert wird. In der Folge kann der Kraftschluss zwischen der Dichtung 11 und dem Dichtungsabschnitt 21 recht groß ausgebildet werden.

Der Längsschnitt der Fluidverbindung 1, 2 aus Fluidleitung 1 und Aggregat 2 in Figur 2 zeigt die Fluidverbindung 1, 2 in einer verriegelten Position. Der Endabschnitt 18 des Hauptkörpers 6 befindet sich dann vorzugsweise in einer Endaufnahme 19 der Kupplung 5. Der Endabschnitt 18 ist mit Vorteil in radialer Richtung formschlüssig in der Endaufnahme 19 angeordnet. Ebenso erzeugt die Dichtung 11 in Verbindung mit einem Dichtungsabschnitt 21 der Kupplung 5 zweckmäßigerweise einen Formschluss und vorzugsweise einen dichtenden Kraftschluss in radialer Richtung. Vorteilhafterweise ist der Innendurchmesser des Dichtungsabschnitts 21 größer als der Innendurchmesser der Endaufnahme 19. Es ist bevorzugt, dass auf die Endaufnahme 19 in axialer Richtung zum Aggregat 2 hin ein Verbindungskanal 29 folgt. Mit Vorteil ist der Innendurchmesser des Verbindungskanals 29 kleiner als der Innendurchmesser der Endaufnahme 19. Es liegt im Rahmen der Erfindung, dass ein Innendurchmesser des Verbindungskanals 29 einem Innendurchmesser des Hauptkörpers 6 bzw. einem Außendurchmesser des Fluidkanals 7 entspricht, wodurch insbesondere Turbulenzen des strömenden Mediums vermieden werden. Zweckmäßigerweise ist die Achse A identisch mit einer Achse des Verbindungskanals 29 bzw. des Rohres 3 am Verbindungsabschnitt 8.

Insbesondere mit Blick auf Figur 2 ist gut erkennbar, dass die Kupplung 5 bzw. das Aggregat 2 einen hinsichtlich der Innendurchmesser vorzugsweise gestuften Aufbau aufweist. Besonders bevorzugt nehmen die Innendurchmesser von dem Dichtungsabschnitt 21, der Endaufnahme 19 und dem Verbindungskanal 29 stufenweise in Richtung des Inneren des Aggregats 2 ab. Zwar handelt es sich bei den Aggregaten 2 in der Regel um Werkstücke aus Kunststoff oder Metall, welche per Spritzguss bzw. in einem Gießverfahren hergestellt werden und entsprechend große Toleranzen aufweisen. Allerdings können die auch bei den Innendurchmessern auftretenden großen Toleranzen in fertigungstechnischer Hinsicht sehr leicht vermieden werden, indem insbesondere die Bereiche der Endaufnahme 19 und des Dichtungsabschnitts 21 mittels Bohrung bzw. Senkbohrung präzisiert werden. Hierdurch werden perfekte Formschlüsse zwischen der Endaufnahme 19 und dem Endabschnitt 18 erreicht. Ebenso wird ein idealer Kraftschluss zwischen der Dichtung 11 und dem Dichtungsabschnitt 21 erzeugt.

Alternativ kann der Hersteller des Aggregats 2 auch auf den Schritt der Nachbohrung verzichten, wodurch größere Toleranzen in Kauf genommen werden. Diese Toleranzen können dann so bemessen sein, dass der Innendurchmesser des Dichtungsabschnitts 21 in einigen Fällen so groß ist, dass die Abdichtung des Dichtungselements 11 gerade ausreichend ist, während in anderen Fällen ausgesprochen große Kraftschlüsse aufgrund etwas zu geringer Innendurchmesser des Dichtungsabschnitts 21 auftreten. Diese großen Kraftschlüsse allerdings können in Kauf genommen werden, weil die Drehung des Verriegelungselements 9 den Kraftaufwand für das letzte, axiale Wegstück beim Einstecken des Steckverbinders 4 spürbar verringert.

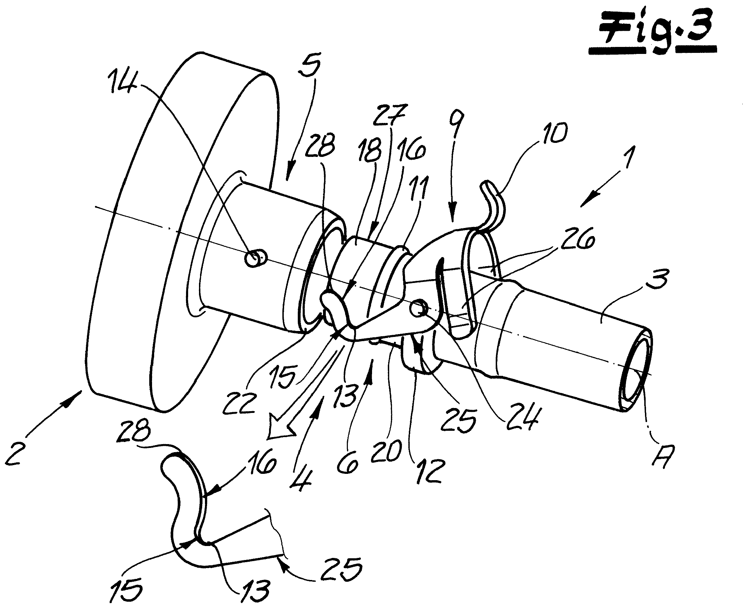

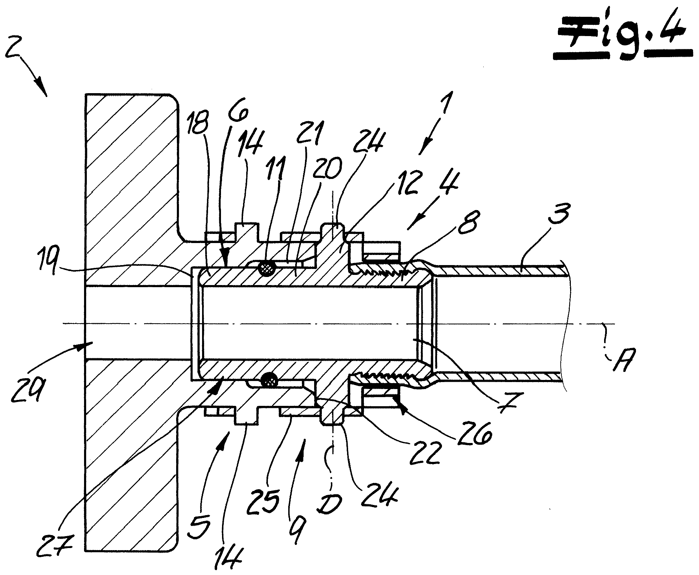

Figur 3 zeigt ein zweites Ausführungsbeispiel des Steckverbinders 4 gemäß der Erfindung. In diesem zweiten Ausführungsbeispiel sind das Aggregat 2, das Rohr 3 sowie die Dichtung 11 identisch zum ersten Ausführungsbeispiel ausgestaltet. Auch der Hauptkörper 6 ist nahezu identisch zum Hauptkörper des ersten Ausführungsbeispiels ausgebildet und unterscheidet sich lediglich in der Befestigung des völlig anders gestalteten Verriegelungselements 9. Demzufolge umfasst der Hauptkörper 6 des zweiten Ausführungsbeispiels zwei diametral einander gegenüberliegende, nach radial außen vorstehende Schwenkzapfen 24. Die Schwenkzapfen 24 sind im vorliegenden Ausführungsbeispiel auf dem Anschlag 12 angeordnet und definieren eine Drehachse D des Verriegelungselements 9. Somit ist die Drehachse D des zweiten Ausführungsbeispiels nicht mehr parallel zur Achse A, sondern vielmehr senkrecht dazu ausgerichtet, s. Figur 4.

Gemäß Figur 3 weist das Verriegelungselement 9 zwei hinsichtlich der Achse A einander gegenüberliegende Schwenkarme 25 auf, welche über die Schwenkzapfen 24 verschwenkbar um die Drehachse D gelagert sind. Mittels eines Betätigungsabschnitts 10, beispielsweise in Form eines Hakens, kann das Verriegelungselement 9 um die Drehachse D herumgedreht werden. Das Verriegelungselement 9 dieses Ausführungsbeispiels umfasst zwei Rastschenkel 26, welche bei Betätigung des Verriegelungselements 9 das Rohr 3 rastend umschließen. Vorteilhafterweise umfasst jeder Schwenkarm 25 des zweiten Ausführungsbeispiels eine Verriegelungskontur 16, welche zweckmäßigerweise einen Ausgangspunkt 28 sowie mit Vorteil eine Verriegelungsstelle 15 aufweist. Es ist bevorzugt, dass die Verriegelungsstelle 15 ein Anzeigeelement 13 umfasst, welches in diesem Ausführungsbeispiel als Anschlag für das Verriegelungsteil 14 ausgebildet ist.

Um das Aggregat 2 mit der Fluidleitung 1 zu verbinden, wird der Steckverbinder 4 in die Kupplung 5 hineingeschoben. Bis dahin liegen die Rastschenkel 26 vorzugsweise auf dem Rohr 3 an, so dass die Rastschenkel 26 in Figur 3 nicht nach unten rutschen können und das Verriegelungselement 9 in einer geöffneten Stellung verbleibt. Der Steckverbinder 4 wird entweder bis zum Anschlag 12 in die Kupplung 5 eingeschoben oder aber bis der Widerstand aufgrund des Kraftschlusses der Dichtung 11 mit dem Dichtungsabschnitt 21 zu groß wurde ohne dass das Stirnende 22 der Kupplung 5 am Anschlag 12 anschlägt. Dann wird das Verriegelungselement 9 über den Betätigungsabschnitt 10 betätigt. Im zweiten Fall erzeugen beim Verschwenken des Verriegelungselements 9 aufgrund der Betätigung am Betätigungsabschnitt 10 die Verriegelungskonturen 16 entlang der Verriegelungsteile 14 eine axial auf den Steckverbinder 4 wirkende Kraft. Diese zieht den Steckverbinder 4 bis zum Anschlagen des Stirnendes 22 an dem Anschlag 12 in die Kupplung 5 hinein. Der Nutzer erkennt am Anschlagen des Verriegelungsteils 14 an dem Anzeigeelement 13, dass die Verriegelung vollständig ist.

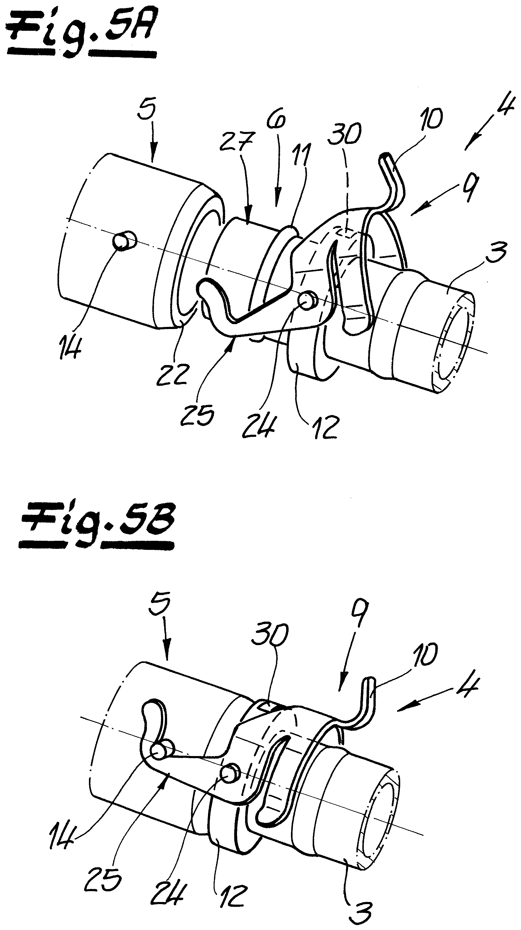

Die Vergrößerung in Figur 5A des Ausführungsbeispiels der Figuren 3 und 4 hebt hervor, dass ein Anzeigesymbol 30 auf dem Hauptkörper 6 bzw. dem Anschlag 12 angeordnet werden kann. Das Anzeigesymbol 30 dieses Ausführungsbeispiels ist als aufgedruckter QR-Code ausgestaltet und wird von dem Verriegelungselement 9 in der geöffneten Position vorzugsweise vollständig verdeckt. Das Verriegelungselement 9 ist vorzugsweise so ausgestaltet, dass bei einer Betätigung des Betätigungsabschnitts 10 das Anzeigesymbol 30 freigegeben bzw. sichtbar wird, wie dies in Figur 5B erkennbar ist. Damit erfüllt das Anzeigesymbol 30 eine ganz ähnliche Funktion wie das Anzeigeelement 13, vereinfacht aber die maschinelle Überprüfbarkeit, ob die Fluidverbindung 1, 2 bzw. der Steckverbinder 4 bzw. das Verriegelungselement 9 die verriegelte Position eingenommen hat. Vorzugsweise ist das Anzeigesymbol 30 auf derjenigen Seite des Hauptkörpers 6 angeordnet, auf welcher sich auch der Betätigungsabschnitt 10 befindet. Es ist bevorzugt, dass das Anzeigesymbol 30 in der gleichen Hälfte bzw. im gleichen Drittel/Viertel des Umfangs des Steckverbinders 4 wie der Betätigungsabschnitt 10 angeordnet ist.

**Bezugszeichen:**

| | | | |
|---|---|---|---|
| 1 | Fluidleitung | 17 | Verstärkung |
| 2 | Aggregat | 18 | Endabschnitt |
| 3 | Rohr | 19 | Endaufnahme |
| 4 | Steckverbinder | 20 | Mittelabschnitt |
| 5 | Kupplung | 21 | Dichtungsabschnitt |
| 6 | Hauptkörper | 22 | Stirnende |
| 7 | Fluidkanal | 23 | Schulter |
| 8 | Verbindungsabschnitt | 24 | Schwenkzapfen |
| 9 | Verriegelungselement | 25 | Schwenkarm |
| 10 | Betätigungsabschnitt | 26 | Rastschenkel |
| 11 | Dichtung | 27 | Steckerschaft |
| 12 | Anschlag | 28 | Ausgangspunkt |
| 13 | Anzeigeelement | 29 | Verbindungskanal |
| 14 | Verriegelungsteil | 30 | Anzeigesymbol |
| 15 | Verriegelungsstelle | A | Achse |
| 16 | Verriegelungskontur | D | Drehachse |

## Patentansprüche

1. Fluidleitung (1) zur Verbindung mit einem Aggregat (2) oder einer anderen Fluidleitung eines Kraftfahrzeugs, wobei die Fluidleitung ein Rohr (3) und wenigstens einen Steckverbinder (4) umfasst, wobei der Steckverbinder (4) zum Einstecken in eine komplementäre Kupplung (5) des Aggregats (2) oder der anderen Fluidleitung ausgebildet ist,
wobei der Steckverbinder (4) einen Hauptkörper (6) aufweist, wobei der Hauptkörper (6) ein erstes, der Kupplung (5) zugeordnetes Ende und ein zweites, dem ersten Ende abgewandtes Ende umfasst, wobei das erste Ende und das zweite Ende durch einen Fluidkanal (7) miteinander verbunden sind, wobei der Fluidkanal (7) eine Achse A aufweist und eine axiale und eine radiale Richtung definiert, wobei das zweite Ende Bestandteil eines Verbindungsabschnitts (8) des Hauptkörpers (6) ist, wobei der Verbindungsabschnitt (8) mit dem Rohr (3) verbunden ist,
wobei der Steckverbinder (4) ein Verriegelungselement (9) zur Verriegelung mit der Kupplung (5) umfasst, wobei das Verriegelungselement (9) relativ zum Hauptkörper (6) drehbar um eine Drehachse D gelagert ist, wobei der Steckverbinder (4) bzw. das Verriegelungselement (9) so ausgebildet ist, dass eine Verriegelung des Steckverbinders (4) über eine Drehung des Verriegelungselements (9) um die Drehachse D erreicht wird, wobei das Verriegelungselement (9) wenigstens eine Verriegelungskontur (16) aufweist,
**dadurch gekennzeichnet, dass**
das Verriegelungselement (9) so ausgebildet ist, dass durch eine Drehung des Verriegelungselements (9) während eines Verriegelungsvorgangs mit einer Kupplung (5) eine axial auf den Steckverbinder (4) einwirkende Kraft in Richtung der Kupplung (5) ausgeübt werden kann.

2. Fluidleitung (1) nach Anspruch 1, wobei die Verriegelungskontur (16) einen beweglichen Verriegelungsweg für ein, vorzugsweise starres, Verriegelungsteil (14) der Kupplung (5) definiert.

3. Fluidleitung (1) nach einem der Ansprüche 1 oder 2, wobei die Verriegelungskontur (16) so ausgebildet ist, dass der notwendige Kraftaufwand beim Verriegeln des Verriegelungselements (9) zunächst ansteigt und dann abfällt, so dass das Verriegeln vorzugsweise ein Einrasten des Verriegelungselements (9) umfasst.

4. Fluidleitung (1) nach einem der Ansprüche 1 bis 3, wobei der Steckverbinder (4) bzw. das Verriegelungselement (9) so ausgebildet ist, dass der Steckverbinder (4) beim Drehen während des Verriegelungsvorgangs um wenigstens 1mm in axialer Richtung zur Kupplung (5) hingezogen wird.

5. Fluidleitung (1) nach einem der Ansprüche 1 bis 4, wobei die Verriegelungskontur (16) wenigstens eine Verriegelungsstelle (15) umfasst, wobei das Verriegelungselement (9) bevorzugt so ausgebildet ist, dass das Verriegelungsteil (14) in der Verriegelungsstelle (15) sichtbar bzw. vollständig sichtbar ist.

6. Fluidleitung (1) nach einem der Ansprüche 1 bis 5, wobei der Steckverbinder (4) bzw. das Verriegelungselement (9) ein Anzeigeelement (13) zur Anzeige der vollständigen Verriegelung umfasst, wobei das Anzeigeelement (13) bevorzugt einen Anschlag der Verriegelungskontur (16) und/oder ein Anzeigesymbol (30) umfasst.

7. Fluidleitung (1) nach einem der Ansprüche 1 bis 6, wobei das Verriegelungselement (9) einen Betätigungsabschnitt (10) zur Durchführung der Verriegelung aufweist.

8. Fluidleitung (1) nach einem der Ansprüche 1 bis 7, wobei der Steckverbinder (4) bzw. der Hauptkörper (6) einen Anschlag (12), vorzugsweise einen Anschlagflansch, aufweist.

9. Fluidleitung (1) nach einem der Ansprüche 1 bis 8, wobei der Steckverbinder (4) eine Dichtung (11) umfasst.

10. Fluidleitung (1) nach einem der Ansprüche 1 bis 9, wobei eine axiale Länge des Verriegelungselements (9) wenigstens 50% bzw. 60% der axialen Länge des Hauptkörpers (6) entspricht.

11. Fluidleitung (1) nach einem der Ansprüche 1 bis 10, wobei die axiale Ausdehnung eines in die Kupplung (5) einsteckbaren Abschnitts des Hauptkörpers (6) wenigstens 20 % bzw. 30 % bzw. 40 % der gesamten axialen Länge des Hauptkörpers entspricht.

12. Fluidleitung (1) nach einem der Ansprüche 1 bis 11, wobei die Drehachse D des Verriegelungselements (9) in axialer bzw. im Wesentlichen axialer Richtung verläuft.

13. Fluidleitung (1) nach einem der Ansprüche 1 bis 11, wobei die Drehachse D des Verriegelungselements (9) in einer Draufsicht des Steckverbinders (4) schräg zur Achse A und vorzugsweise in radialer bzw. im Wesentlichen radialer Richtung verläuft.

14. Fluidverbindung umfassend eine Kupplung (5) und eine Fluidleitung (1) nach einem der Ansprüche 1 bis 13, wobei der Steckverbinder (4) der Fluidleitung (1) in die Kupplung (5) eingesteckt bzw. einsteckbar ist.

15. Verwendung der Fluidleitung (1) nach einem der Ansprüche 1 bis 13 bzw. der Fluidverbindung nach Anspruch 14 in einem Kraftfahrzeug, insbesondere in einem Kühlmittelkreislauf, vorzugsweise für ein Batteriemodul, eines Kraftfahrzeugs.
